# EUROPEAN PATENT SPECIFICATION

(11) **EP 1 811 758 B1**
(45) Date of publication and mention of the grant of the patent: **06.05.2015**
(21) Application number: 05795431.5
(22) Date of filing: 29.09.2005
(51) Int. Cl.: H04M 3/56, H04M 3/42, H04M 3/487

(54) **A METHOD FOR ADDING BACKGROUND SOUND TO MOBILE COMMUNICATION TELEPHONE TALKING AND COMMUNICATION SYSTEM THEREOF**
VERFAHREN ZUM HINZUFÜGEN VON HINTERGRUNDGERÄUSCH ZU MOBILKOMMUNIKATIONS-TELEFONGESPRÄCHEN UND KOMMUNIKATIONSSYSTEM DAFÜR
METHODE POUR AJOUTER UN FOND SONORE A UNE CONVERSATION TELEPHONIQUE DE COMMUNICATION MOBILE ET SYSTEME DE COMMUNICATION ASSOCIE

(30) Priority: 29.10.2004 CN 200410088445
(43) Date of publication of application: 25.07.2007
(73) Proprietor: China Mobile Communications Corporation, Xicheng District Beijing 100032 (CN)
(72) Inventor: SUN, Nan, Beijing 100032 (CN); ZHENG, Zhaohui, Beijing 100032 (CN); YU, Rongrong, Beijing 100032 (CN); FENG, Lingjun, Beijing 100032 (CN)
(74) Representative: Manitz, Finsterwald & Partner GbR
(86) International application number: PCT/CN2005/001604
(87) International publication number: WO 2006/045237

(56) References cited:
- WO-A1-98/34392
- WO-A1-2004/064360
- JP-A- 2004 274 464
- KR-A- 2002 080 956
- US-B1- 6 683 938

## Description

### Field of the Invention

The present invention relates to a method for adding background sound to mobile communication telephone talking and a communication system thereof. In particular, the present invention relates to a method for adding background sound to mobile communication telephone talking in which background sound of a non-talking party is played during mobile communication voice talking in order to make the talking more interesting, and corresponding communication system thereof. The present invention pertains to the field of communication technology.

### Description of the Related Art

With the development of the system and market of communication technology, demands of people for communication have become more and more diversified. Therefore, as for these diversified demands, various communication technologies have been developed and relevant communication services have been produced and introduced to meet multilevel and multicolored requirements of people for communication. In the field of conventional voice talking, some communication enterprises have already provided sound-effect-based technologies and corresponding services. For example, one of such services is the coloring ring back tone service, which makes a calling party receiving the service hear the sound effect ordered by the called party after the calling is connected and before the talking, and changes the conventional monotonous ring back tone into colorful and individualized sound effect, adding new taste in the talking.

Although more and more technologies for voice talking are introduced continuously, communication technologies which can change the sound effect in the actual talking have not been greatly improved. The existing voice talking technology is directed more to how to reduce the noise interference during the talking and how to improve the quality of talking voice signal. However, it never relates to changing sound effect during the talking. Actually, people have various demands and hope to play during the talking the sound generated by the non-talking parties, i.e. a background sound.

Background sounds are those other sounds added to the sounds of respective parties of a talking. These sounds may be set depending on the people's demands, such as sounds of pets, funny popular words, feeling expressing voices, sounds of water of the nature and atmosphere effect sounds, etc. Playing these sounds generated by the non-talking parties may change the monotonous talking mode in which pure voice is listened, and add sounds enlivening the atmosphere. This will make routine telephone talking more interesting.

US 6,683,938 B1 discloses a voice processing system that provides background audio during a telephone call between a caller and a callee telephony device, a storage system contains digital audio data and a database includes a plurality of subscriber data elements associated with the caller and callee devices, a processing device provides the digital audio data during the telephone call based on the subscriber data elements linked to the caller or callee devices such that background audio is provided during a telephone call.

### Summary of the Invention

One aspect of the present invention is to provide a method for adding background sound to mobile communication telephone talking. In the method according to the present invention, a talking link of a third party which is provided by a background sound system is added and a three-party talking is established at the time of establishing a talking link between the calling mobile communication terminal and the called mobile communication terminal. Meanwhile, the sound effect of the background sound may be controlled by the contracted party through its mobile communication terminal, making the conventional mobile telephone talking more interesting and humanized due to the background sound added.

The aspect of the present invention is achieved as follows:
Receiving, by a network side, a call made by a calling mobile communication terminal;
sending, by the network side, a ring back tone signal to the calling mobile communication terminal according to a talking state of a called mobile communication terminal, establishing a talking link between the calling mobile communication terminal and the called mobile communication terminal after the off-hook signal of the called mobile communication terminal is received; and
playing, by a background sound service system provided in the network side, background sound to the calling mobile communication terminal and the called mobile communication terminal according to information on background sound service;
wherein playing background sound to the calling mobile communication terminal and the called mobile communication terminal by the background sound service system comprises:
   according to information on a number of the calling mobile communication terminal, seeking out, by the background sound service system, subscribing information on the calling mobile communication terminal and acquiring playing parameters and playing contents, and sending the playing parameters and playing contents to the calling mobile communication terminal and the called mobile communication terminal through a mobile switching center, and processing respectively, by the calling mobile communication terminal and the called mobile communication terminal, the received playing parameters and playing contents, and playing the background sound together with corresponding voices; or
   according to information on a number of the called mobile communication terminal, seeking out, by the background sound service system, subscribing information on the called mobile communication terminal and acquiring playing parameters and playing contents, and sending the playing parameters and playing contents to the calling mobile communication terminal and the called mobile communication terminal through a mobile switching center, and processing respectively, by the calling mobile communication terminal and the called mobile communication terminal, the received playing parameters and playing contents, and playing the background sound together with corresponding voices.

It should be noted that in the technical solution above, the calling mobile communication terminal and the called mobile communication terminal may be or may not be a contracted subscriber of the background sound service; one may be a contracted subscriber of the background sound service while the other not; and both of them may be contracted subscribers of the background sound service. Thus, in the technical solution of the present invention, the background sound service system offers background sound playing services according to the contracting information only. In other words, even though the background sound service system has played background sound to the calling mobile communication terminal and the called mobile communication terminal according to the contracting state of the calling mobile communication terminal, it shall simultaneously play background sound to the calling mobile communication terminal and the called mobile communication terminal according to the contracting state of the called mobile communication terminal, so long as the called mobile communication terminal is also a contracted subscriber. If both of the calling mobile communication terminal and the called mobile communication terminal are contracted, when the calling mobile communication terminal and the called mobile communication terminal are engaged, two background sounds of the background sound service system can be heard in both the calling mobile communication terminal and the called mobile communication terminal.

In summary, the present invention provides a technical solution for adding background sound during the talking based on a mobile communication network, wherein the background sound may be added to the talking between the calling and the called parties and therefore, new telecommunications valued-added services may be added in existing mobile communication networks, making the talking between the calling and called parties more interesting and humanized.

### Brief Description of the Drawings

Figure 1 is the processing flowchart of the first embodiment of the present invention;
Figure 2 is the processing flowchart of the first embodiment of the present invention with the called party being a contracted subscriber;
Figure 3 is flowchart with the calling party being not a contracted subscriber and the called party being a contracted subscriber;
Figure 4 is processing flowchart of the calling party and/or the called party of the present invention at roaming state.
Figure 5 is a general block diagram of a mobile communication system with a background sound service system;
Figure 6 is a block diagram of another mobile communication system of the present invention with a background sound service system.

### Detailed Description of the Preferred Embodiments

The present invention will be described in detail with reference to the figures and embodiments.

### Embodiment 1

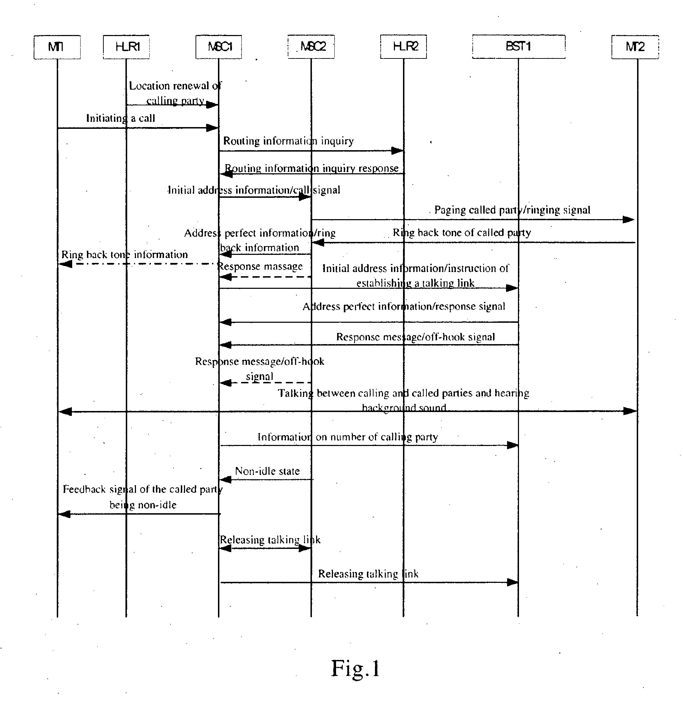

Referring to figure 1, in one embodiment of the present invention, a calling mobile communication terminal MT1 is a contracted subscriber of a background sound service and a called mobile communication terminal MT2 is not a contracted subscriber of a background sound service. The contracting information of the calling mobile communication terminal MT1 is stored in a home location register HLR1 of the calling mobile communication terminal MT1, and a mobile switching center MSC1 of the calling party may acquire relevant contracting information through making access to the home location register HLR1 of the calling mobile communication terminal MT1 and simultaneous provides background sound playing service through a background sound service system BST1 connected to the mobile communication network at the time of establishing a talking link with the called mobile communication terminal MT2. Following is the flowchart in detail:
The calling mobile communication terminal MT1 begins a call to the called mobile communication terminal MT2 through a mobile communication base station BS1 (not shown) and the mobile switching center MSC1 of the calling party. The mobile switching center MSC1 of the calling party, based the number of the called mobile communication terminal MT2, sends a calling signal to a mobile switching center MSC2 of the called party through the mobile communication network.

Upon receiving the calling signal, the mobile switching center MSC2 of the called party judges the talking state of the called mobile communication terminal MT2. If the called mobile communication terminal MT2 is in an idle state, the mobile switching center MSC2 of the called party sends a ringing signal to the called mobile communication terminal MT2 through a mobile communication base station BS2 (not shown) and sends a ring back signal to the mobile switching center MSC1 of the calling party through the mobile communication network. Otherwise, the mobile switching center MSC2 of the called party sends to the mobile switching center MSC1 of the calling party the information that the called mobile communication terminal MT2 is in a non-idle state.

Upon receiving the ring back signal sent by the mobile switching center MSC2 of the called party, the mobile switching center MSC1 of the calling party transfers the ring back signal to the calling mobile communication terminal MT1 through the mobile communication base station BS1 I (not shown). If the calling mobile communication terminal MT1 is a contracted subscriber of a background sound service, the mobile switching center MSC1 of the calling party, upon receiving the off-hook signal of the called mobile communication terminal MT2, establishes a three-party talking between the calling mobile communication terminal MT1, the called mobile communication terminal MT2 and the background sound service system BST1 and sends the information on the number of the calling mobile communication terminal MT1 to the background sound service system BST1. The background sound service system BST1 plays corresponding background sound ordered by the calling mobile communication terminal MT1 to the calling mobile communication terminal MT1 and the called mobile communication terminal MT2 through the mobile switching center MSC1 of the calling party;
If the information that the called mobile communication terminal MT2 is in a non-idle state which is sent by the mobile switching center MSC2 of the called party is received, the mobile switching center MSC1 of the calling party, based upon relevant information, sends corresponding feedback signal to the calling mobile communication terminal MSC1 through the mobile communication base station BS1 (not shown) and terminates the call;
Upon on-hook of either of the calling mobile communication terminal MT1 or the called mobile communication terminal MT1, the mobile switching center MSC1 of the calling party and the mobile switching center MSC2 of the called party release a corresponding talking link. If a three-party talking is made between the calling mobile communication terminal MT1, the called mobile communication terminal MT2 and the background sound service system BST1 by the mobile exchange MSC1 of the calling party, the mobile switching center MSC1 of the calling party releases simultaneously a corresponding talking link with the background sound service system BST1. The background sound service system BST1 ceases playing the background sound ordered by the calling mobile communication terminal MT1 to the calling mobile communication terminal MT1 and the called mobile communication terminal MT2.

In the embodiment above, when the mobile switching center MSC1 of the calling party judges whether the calling mobile communication terminal MT1 is a contracted subscriber, the mobile switching center MSC1 of the calling party makes access to the home location register HLR1 of the calling mobile communication terminal MT1 to obtain the information on the contracting of background sound service of the calling mobile communication terminal MT1, Actually, the information on the contracting of background sound service of the calling mobile communication terminal MT1 is stored in the home location register HLR1 of the calling mobile communication terminal MT1. When the mobile switching center MSC1 of the calling party makes access to the home location register HLR1, it reads out a series of service sign information including the sign information on the background sound service, from which the mobile switching center MSC1 of the calling party seeks out the sign indicating the contracting state of the background sound service, and makes judgment to acquire whether the calling mobile communication terminal MT1 is contracted.

When the calling mobile communication terminal MT1 is a contracted subscriber of the background sound service, the mobile switching center MSC1 of the calling party establishes the three-party talking through the procedures as follows:
The mobile switching center MSC1 of the calling party sends to the background sound service system BST1 instructions to establish a talking link at the time of establishing a talking link between the calling mobile communication terminal MT1 and the called mobile communication terminal MT2. The instruction is actually a call signaling sent to the switching device in the background sound service system. When the background sound service system BST1 receives the call signaling sent by the mobile switching center MSC1 of the calling party, as long as there is an idle channel in the switching device, the switching device will make response to the call signaling, and send off-hook signal to the mobile switching center MSC1 of the calling party after the response is made. Upon receiving the response signal and the off-hook signal, the mobile switching center MSC1 of the calling party adds the background sound service channel provided by the background sound service system BST1 to the talking link between the calling mobile communication terminal MT1 and the called mobile communication terminal MT2, to establish a three-party talking.

During the playing of background sound ordered by the calling mobile communication terminal MT1 by the background sound service system BST1, the background sound service system BST1. based upon the number information of the calling mobile communication terminal MT1, for example, "13901234567", seeks out the contracting information on the calling mobile communication terminal MT1 in the background sound service system BST1 and acquires the playing parameters and playing contents from such information. Then it packages the playing contents and corresponding playing parameters in a format of mobile communication data and sends them to the calling mobile communication terminal MT1 and the called mobile communication terminal MT2 through the mobile switching center MSC1 of the calling party. The calling mobile communication terminal MT1 and the called mobile communication terminal MT2, according to relevant protocols of mobile communication, processes respectively the received playing data, restores the data to corresponding audio signals and plays the signals together with corresponding voices.

In order to control the background sound played during the talking, the calling subscriber may press corresponding control buttons on the calling mobile communication terminal MT1. The values of such buttons are transferred by the calling mobile communication terminal MT1 to the background sound service system BST through the mobile communication base station BS1 (not shown) and the mobile switching center MSC1 of the calling party. The control device in the background sound service system BST1 calls the functions corresponding to these values upon receiving relevant values of the buttons, to achieve the control of the playing of the background sound.

For example, if the value of the button "*" corresponds to the function of pausing the playing of the background sound, the control device in the background sound service system BST1, upon receiving value of the button "*" from the calling mobile communication terminal MT1, gives instructions to pause the playing for a period of time, for example, 5 seconds, to the playing device in the background sound service system BST1. Then the playing device in the background sound service system BST1 pauses the playing of the background sound for that period of time.

For another example, if the value of the button "#" corresponds to the function of faster playing of the background sound, the control device in the background sound service system BST1, upon receiving value of the button "#" from the calling mobile communication terminal MT1, gives instructions to faster play the background sound, to the playing device in the background sound service system BST1. Then the playing device in the background sound service system BST1 increases the speed of playing the background to the set speed.

For a further example, if the value of a button corresponds to a certain level of volume of the background sound, the control device in the background sound service system BST, upon receiving value of the button from the calling mobile communication terminal MT1, gives instructions to adjust the volume corresponding to the button, to the playing device in the background sound service system BST1. Then the playing device in the background sound service system BST1 plays the background sound at that level of volume, when the corresponding data package is received by the calling mobile communication terminal MT1 and the called mobile communication terminal MT2.

All the control and adjustment above are based upon the operations of the buttons and their corresponding functions, and may be but not be limited to the contents as described above. They may also be the background sound to be selected to play, adjusting the effect of the playing of the background sound, or controlling the start or stop of the playing of the background sound, etc.

### Embodiment 2:

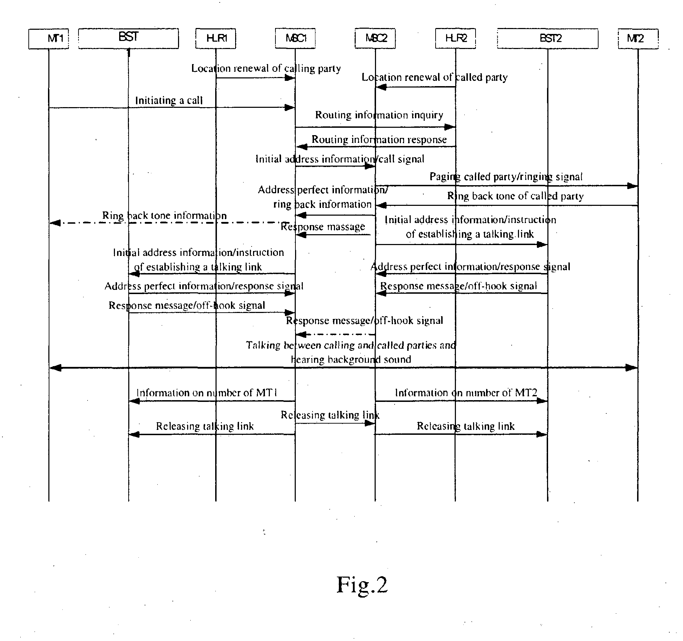

Referring to figure 2, in the second embodiment of the present invention, the calling mobile communication terminal MT1 is a contracted subscriber of background sound service and the called mobile communication terminal MT2 is also a contracted subscriber of background sound service. The contracting information of the calling mobile communication terminal MT1 is stored in the home location register HLR1 of the calling mobile communication terminal MT1 and the contracting information of the called mobile communication terminal MT2 is stored in the home location register HLR2 of the called mobile communication terminal MT2. The corresponding contracting information may be acquired by the mobile switching center MSC1 of the calling party through making access to the home location register HLR1 of the calling mobile communication terminal MT1 and by the mobile switching center MSC2 of the called party through making access to the home location register HLR2 of the called mobile communication terminal MT2. The background sound service may be offered through the background sound service system BST2 connected to the mobile communication network at the time of establishing a talking link with the called mobile communication terminal MT2. Following is the detailed flowchart:
The calling mobile communication terminal MT1 makes a call to the called mobile communication terminal MT2 through the mobile switching center MSC1 of the calling party, establishes a three-party talking with the background sound service system BST1, acquires the contracting information on the calling mobile communication terminal MT1 through the home location register HLR1 of the calling mobile communication terminal MT1, and controls the playing of the background sound through the buttons. All the above steps are similar to those described in embodiment 1. What is different in embodiment 2 from embodiment 1 is that if the called mobile communication terminal MT2 is also a contracted subscriber of background sound service, following procedures shall be carried out besides those as mentioned above:

When the mobile switching center MSC2 of the called party sends a ringing signal to the called mobile communication terminal MT2 through the mobile communication base station BS2 (not shown), if the called mobile communication terminal MT2 is a contracted subscriber of the background sound service, the mobile switching center MSC2 of the called party, upon receiving the off-hook signal of the called mobile communication terminal MT2, establishes a three-party talking between the calling mobile communication terminal MT1, the called mobile communication terminal MT2 and the background sound service system BST2 and sends the information on the number of the called mobile communication terminal MT2 to the background sound service system BST2, for example, "13901234567". The background sound service system BST2 plays the background sound ordered by the called mobile communication terminal MT2 to the calling mobile communication terminal MT1 and the called mobile communication terminal MT2 through the mobile switching center MSC2 of the called party;

Upon on-hook of either of the calling mobile communication terminal MT1 or the called mobile communication terminal MT2, if a three-party talking is made between the calling mobile communication terminal MT1, the called mobile communication terminal MT2 and the background sound service system BST2 by the mobile exchange MSC2 of the called party, the mobile switching center MSC2 of the called party releases simultaneously a corresponding talking link with the background sound service system BST2. The background sound service system BST2 ceases playing the background sound ordered by the called mobile communication terminal MT2 to the calling mobile communication terminal MT1 and the called mobile communication terminal MT2.

In the embodiment above, when the mobile switching center MSC2 of the called party judges whether the called mobile communication terminal MT2 is a contracted subscriber, the mobile switching center MSC2 of the called party makes access to the home location register HLR2 of the called mobile communication terminal MT2 to obtain the information on the contracting of background sound service of the called mobile communication terminal MT2. Actually, the information on the contracting of background sound service of the called mobile communication terminal MT2 is stored in the home location register HLR2 of the called mobile communication terminal MT2. When the mobile switching center MSC2 of the called party makes access to the home location register HLR2, it reads out a series of service sign information including the sign information on the background sound service, from which the mobile switching center MSC2 of the called party seeks out the sign indicating the contracting state of the background sound service and makes judgment, to acquire whether the called mobile communication terminal MT2 is contracted.

When the called mobile communication terminal MT2 is a contracted subscriber of the background sound service, the mobile switching center MSC2 of the called party establishes the three-party talking through the procedures as follows:
The mobile switching center MSC2 sends the background sound service system BST2 instructions to establish a talking link at the time of establishing a talking link between the calling mobile communication terminal MT1 and the called mobile communication terminal MT2. The instruction is actually a call signaling sent to the switching device in the background sound service system BST2. When the background sound service system BST2 receives the call signaling sent by the mobile switching center MSC2 of the called party, as long as there are idle channels in the switching device, the switching device will make response to the call signaling, and send off-hook signal to the mobile switching center MSC2 of the called party after the response is made. Upon receiving the response signal and the off-hook signal, the mobile switching center MSC2 of the called party adds the background sound service channel provided by the background sound service system BST2 to the talking link between the calling mobile communication terminal MT1 and the called mobile communication terminal MT2, to establish a three-party talking.

During the playing of background sound ordered by the called mobile communication terminal MT2 by the background sound service system BST2, the background sound service system BST2, based upon the number information of the called mobile communication terminal MT2, for example, "13901234567", seeks out the contracting information on the called mobile communication terminal MT2 in the background sound service system BST2 and acquires the playing parameters and playing contents from such information. Then it packages the playing contents and corresponding playing parameters in a format of mobile communication data and sends them to the calling mobile communication terminal MT1 and the called mobile communication terminal MT2 through the mobile switching center MSC2 of the called party. The calling mobile communication terminal MT1 and the called mobile communication terminal MT2 processes respectively the received playing data according to relevant protocols of mobile communication, restores the data to corresponding audio signals and plays the signals together with corresponding voices.

In order to control the background sound played during the talking, the called subscriber may press corresponding control buttons on the called mobile communication terminal MT2, and the values of such buttons are transferred by the called mobile communication terminal MT2 to the background sound service system BST2 through the mobile communication base station BS2 (not shown) and the mobile switching center MSC2 of the called party. The control device in the background sound service system BST2 calls the functions corresponding to these values upon receiving relevant values of the buttons, to achieve the control of the playing of the background sound.

The manner in which the called mobile communication terminal MT2 plays the background sound through control of the background sound service system BST2 by the buttons is substantially the same as that in embodiment 1 and is not described further.

It can be seen from the embodiment 2 above that, when both the calling mobile communication terminal MT1 and the called mobile communication terminal MT2 are contracted subscribers of background sound service, if a talking link is made between the calling mobile communication terminal MT1 and the called mobile communication terminal MT2, both of the calling and called parties can hear the background sound ordered by both the parties, and the calling and called parties can control or adjust the playing effect of respective background sound.

### Embodiment 3

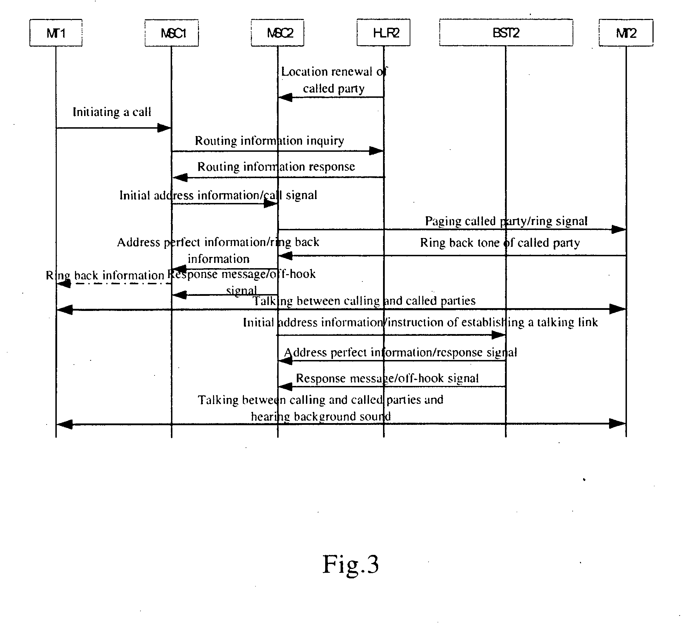

Referring to figure 3, if the calling mobile communication terminal MT1 is not a contracted subscriber of background sound service, the mobile switching center MSC1 of the calling party, upon receiving the on-hook signal of the called mobile communication terminal MT2, only establishes a two-party talking link between the calling mobile communication terminal MT1 and the called mobile communication terminal MT2. If the called mobile communication terminal MT2 is also not a contracted subscriber of background sound service, the said talking link is an ordinary voice talking link. But, if the called mobile communication terminal MT2 is a contracted subscriber of background sound service, according to the method described in embodiment 2 above, the mobile switching center MSC2 of the called party will establish a three-party talking between the calling mobile communication terminal MT1, the called mobile communication terminal MT2 and the background sound service system BST2. The background sound service system BST2 plays background sound to the calling mobile communication terminal MT1 and the called mobile communication terminal MT2 simultaneously and is controlled only by the called mobile communication terminal MT2.

### Exemplary embodiment 4

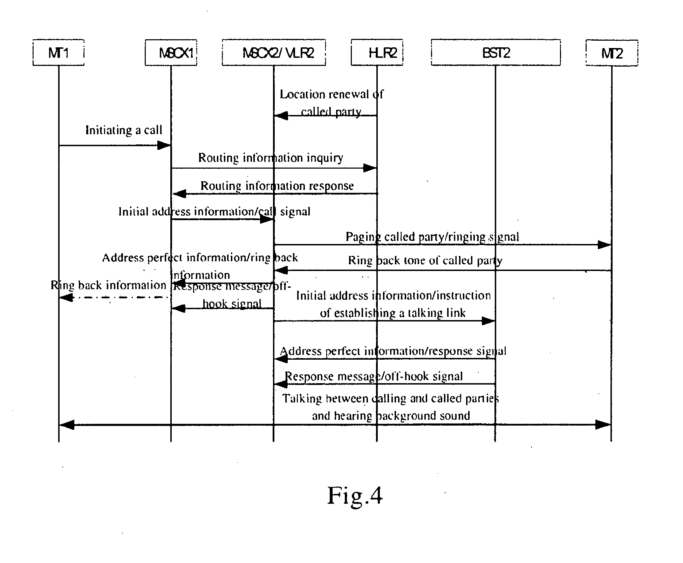

Referring to figure 4, when the calling mobile communication terminal MT1 is at roaming state, the mobile switching center MSC1 of the calling party, making a call to the calling mobile communication terminal MT1 according to the communication and switching standards of mobile communication networks, is actually the switching center MSCX1 of the roamed location of the calling party. At this time, if the calling mobile communication terminal MT1 makes a call to the called mobile communication terminal MT2, the switching center MSCX1 of the roamed location of the calling party, instead of the mobile switching center MSC1 of the calling party, establishes a talking link with the called mobile communication terminal MT2 and the background sound service system BST1. At this time, the information on the contracting sign of the calling mobile communication terminal MT1 is stored in the visitor location register VLR1 (not shown) of the roamed location of the calling mobile communication terminal MT1. In other words, when a three-party talking between the calling mobile communication terminal MT1, the called mobile communication terminal MT2 and the background sound service system BST1 is establishing, the switching center MSCX1 of the roamed location of the calling party needs to firstly make access to the visitor location register VLR1 (not shown) of the roamed location of the calling mobile communication terminal MT1 to acquire the information on the contracting state of the calling mobile communication terminal MT1.

Similar to the calling mobile communication terminal MT1, when the called mobile communication terminal MT2 is at roaming state, the mobile switching center MSC2 of the calling party, making a call to the called mobile communication terminal MT2 according to the communication and switching standards of mobile communication networks, is actually the switching center MSCX2 of the roamed location of the called party. At this time, if the calling mobile communication terminal MT1 makes a call to the called mobile communication terminal MT2, the switching center MSCX2 of the roamed location of the called party, instead of the mobile switching center MSC2 of the called party, establishes a talking link with the calling mobile communication terminal MT2. At this time, the information on the contracting sign of the called mobile communication terminal MT2 is stored in the visitor location register VLR2 (not shown) of the roamed location of the called mobile communication terminal MT2. In other words, when the switching center MSCX2 of the roamed location of the called party establishes a three-party talking between the calling mobile communication terminal MT1, the called mobile communication terminal MT2 and the background sound service system BST2, the switching center MSCX2 of the roamed location of the called party needs to first make access to the visitor location register VLR2 (not shown) of the roamed location of the called mobile communication terminal MT2 to acquire the information on the contracting state of the called mobile communication terminal MT2.

### Exemplary embodiment 5

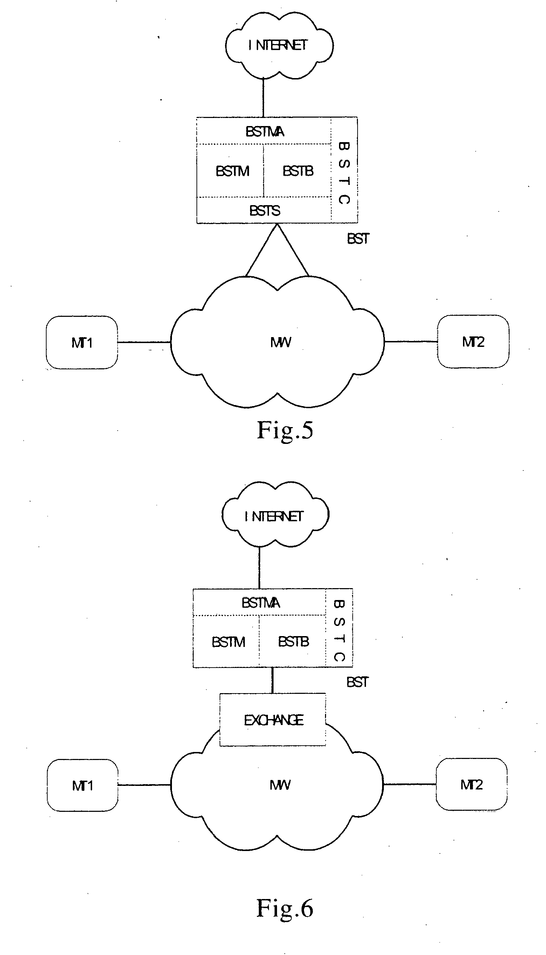

Referring to figure 5, for the subscribers of the background sound to order, modify, adjust or cancel the background sound service, the background sound service operators to rapidly introduce the background sound service and manage the background sound data, and the background sound providers to be able to transmit the data of background sound to and store them in the background sound service system, it is required by the existing mobile communication system to incorporate a background sound service system to make the existing mobile communication system have a function of providing background sound playing. As an example of the present invention, the mobile communication system is characterized in that: more than one mobile communication terminals MT are connected to a mobile switching center MSC through a mobile communication base station BS (not shown), wherein more than one mobile switching centers MSC are connected to each other through a mobile communication network MW; one or more than one background sound service systems BST are connected to the mobile communication network MW; the background sound service system BST comprises at least a switching device BSTS, a background sound storage device BSTM, a background sound playing device BSTB and a control device BSTC that are connected to each other; wherein,

The switching device BSTS is used to connect to the mobile communication network MW, establish a corresponding talking link in response to the instruction of establishing a talking link sent by the mobile switching center MSC. It sends data of background sound to be played by the background sound playing device BSTB after the talking link is established, receives the control demand sent to the background sound system by the mobile communication terminal MT and transfers the control demand to the control device BSTC.

The background sound storage device BSTM is used to store the data of background sound and playing parameters of contracted subscribers of background sound.

The background sound playing device BSTB is used to read out the data of background sound to be played from the background sound storage device BSTM, package and send through the switching device BSTS the data of background sound according to relevant playing parameters and transmission protocols of the mobile communication network MW.

The control device BSTC is used to control the playing operations of the background sound playing device BSTB according to the control demand when the talking link is established, or control the stop of the playing of the background sound of the background sound playing device BSTB when the talking link is released.

The switching device BSTS is provided in the mobile communication network MW and may be an existing switching device in the mobile communication network, or a switching module particularly provided in the background sound service system. Regardless of a switching device or a switching module, the switching device BSTS is provided with a port for connecting to the mobile communication network MW according to mobile communication protocols, as well as ports interacting with the control device BSTC and the background sound playing device BSTB.

The background sound playing device BSTB is connected to the control device BSTC for analyzing the control demand sent by the control device BSTC, and selecting the background sound to be played according to the analyzed demand, adjusting the speed, volume or effect of playing of the background sound, or controlling the start or stop of playing of the background sound.

### Exemplary embodiment 6

Referring to figure 6, for the background sound data in the background sound service system BST to be managed, the background sound providers to be able to store the data of background sound in the background sound service system BST and the subscribers of the background sound to order, modify, adjust or cancel the background sound service, a background sound data management device BSTMA is provided in the background sound service system BST. The background sound data management device BSTMA is connected to the Internet and by means of which, the background sound service operators may manage the background sound service system BST and the data in it. The background sound providers store the background sound data in the background sound storage device BSTM under the control of the background sound data management device BSTMA through the Internet. The subscribers of the background sound interact with the background sound data management device BSTMA through the Internet to order, modify, adjust or cancel the background sound service. The operators of the background sound manage the background sound data through the background sound data management device.

## Claims

1. A method for adding background sound to mobile communication talking, comprising:
receiving, by a network side, a call made by a calling mobile communication terminal;
sending, by the network side, a ring back tone signal to the calling mobile communication terminal according to a talking state of a called mobile communication terminal, establishing a talking link between the calling mobile communication terminal and the called mobile communication terminal after the off-hook signal of the called mobile communication terminal is received; and
playing, by a background sound service system provided in the network side, background sound to the calling mobile communication terminal and the called mobile communication terminal according to information on background sound service;
**characterized in that**
playing background sound to the calling mobile communication terminal and the called mobile communication terminal by the background sound service system comprises:
according to information on a number of the calling mobile communication terminal, seeking out, by the background sound service system, subscribing information on the calling mobile communication terminal and acquiring playing parameters and playing contents, and sending the playing parameters and playing contents to the calling mobile communication terminal and the called mobile communication terminal through a mobile switching center, and processing respectively, by the calling mobile communication terminal and the called mobile communication terminal, the received playing parameters and playing contents, and playing the background sound together with corresponding voices; or
according to information on a number of the called mobile communication terminal, seeking out, by the background sound service system, subscribing information on the called mobile communication terminal and acquiring playing parameters and playing contents, and sending the playing parameters and playing contents to the calling mobile communication terminal and the called mobile communication terminal through a mobile switching center, and processing respectively, by the calling mobile communication terminal and the called mobile communication terminal, the received playing parameters and playing contents, and playing the background sound together with corresponding voices.

2. A method of claim 1, **characterized in that** the information on background sound service is:
a background sound service number carried in a number dialed by the calling mobile communication terminal.

3. A method of claim 2, **characterized in that** a special service identification code of the background sound, a serial number of the background sound to be played and a control speed of the background sound to be played are carried by the background sound service number.

4. A method of claim 1, **characterized in that** the information on the background sound service is:
information on subscribing of the background sound service of the calling mobile communication terminal; and/or
information on subscribing of the background sound service of the called mobile communication terminal.

5. A method of claim 1, 2, 3 or 4, **characterized in that** the procedure of establishing the talking link between the calling mobile communication terminal and the called mobile communication terminal and playing background sound to the calling mobile communication terminal and the called mobile communication terminal by the background sound service system further comprises:
establishing, by the network side, a three-party talking link between the calling mobile communication terminal, the called mobile communication terminal and the background sound service system;
playing, by the background sound service system, the background sound to the calling mobile communication terminal and the called mobile communication terminal.

6. A method of claim 5, **characterized in that** the network side comprises the mobile switching center, and the mobile switching center establishes the three-party talking link between the calling mobile communication terminal, the called mobile communication terminal and the background sound service system.

7. A method of claim 6, **characterized in that** the procedure of establishing the three-party talking link between the calling mobile communication terminal, the called mobile communication terminal and the background sound service system by the mobile switching center further comprises:
establishing, by the mobile switching center, a talking link between the calling mobile communication terminal and the called mobile communication terminal and sending instructions to establish a talking link to the background sound service system;
providing, by the background sound service system, a background sound service channel to the mobile switching center;
adding, by the mobile switching center, the background sound service channel provided by the background sound service system to the talking link between the calling mobile communication terminal and the called mobile communication terminal to establish the three-party talking.

8. A method of claim 1 or 7, **characterized in that** the mobile switching center is
a mobile switching center of the calling party, or
a mobile switching center of the roamed location of calling party, or
a mobile switching center of the called party, or
a mobile switching center of the roamed location of called party.

9. A method of claim 5, **characterized in that** the procedure of playing background sound to the calling mobile communication terminal and the called mobile communication terminal by the background sound service system further comprises the step of:
the background sound service system controlling the playing of the background sound according to the button signal sent by the calling mobile communication terminal and/or the called mobile communication terminal.

10. A method of claim 9, **characterized in that** the content of the controlling to the playing of the background sound according to the button signal comprises one of the following or the combination thereof:
selecting the background sound to be played, adjusting the speed of playing of the background sound, adjusting the volume of playing of the background sound, adjusting the effect of playing of the background sound, starting playing of the background sound or stopping playing of the background sound.

## Patentansprüche

1. Verfahren zum Hinzufügen eines Hintergrundgeräuschs zu einem Mobilkommunikationsgespräch, das umfasst, dass:
durch eine Netzseite ein Anruf empfangen wird, der durch ein anrufendes Mobilkommunikationsendgerät getätigt wird;
durch die Netzseite gemäß einem Gesprächszustand eines angerufenen Mobilkommunikationsendgeräts ein Rückruftonsignal an das anrufende Mobilkommunikationsendgerät gesendet wird, wobei eine Gesprächsverbindung zwischen dem anrufenden Mobilkommunikationsendgerät und dem angerufenen Mobilkommunikationsendgerät hergestellt wird, nachdem das Abgehoben-Signal des angerufenen Mobilkommunikationsendgeräts empfangen wird; und
durch ein Hintergrundgeräuschdienstsystem, das auf der Netzseite bereitgestellt wird, gemäß einer Information hinsichtlich des Hintergrundgeräuschdiensts ein Hintergrundgeräusch für das anrufende Mobilkommunikationsendgerät und das angerufene Mobilkommunikationsendgerät abgespielt wird;
**dadurch gekennzeichnet, dass**
das Abspielen des Hintergrundgeräuschs für das anrufende Mobilkommunikationsendgerät und das angerufene Mobilkommunikationsendgerät durch das Hintergrundgeräuschdienstsystem umfasst, dass:
gemäß einer Information hinsichtlich einer Nummer des anrufenden Mobilkommunikationsendgeräts durch das Hintergrundgeräuschdienstsystem eine Teilnahmeinformation hinsichtlich des anrufenden Mobilkommunikationsendgeräts ausfindig gemacht wird und Abspielparameter und Abspielinhalte erlangt werden, und die Abspielparameter und Abspielinhalte über eine Mobilfunkvermittlungsstelle an das anrufende Mobilkommunikationsendgerät und das angerufene Mobilkommunikationsendgerät gesendet werden, und durch das anrufende Mobilkommunikationsendgerät und das angerufene Mobilkommunikationsendgerät jeweils die empfangenen Abspielparameter und Abspiefinhalte verarbeitet werden, und das Hintergrundgeräusch zusammen mit entsprechenden Stimmen abgespielt wird; oder
gemäß einer Information hinsichtlich einer Nummer des angerufenen Mobilkommunikationsendgeräts durch das Hintergrundgeräuschdienstsystem eine Teilnahmeinformation hinsichtlich des angerufenen Mobilkommunikationsendgeräts ausfindig gemacht wird und Abspielparameter und Abspielinhalte erlangt werden, und die Abspielparameter und Abspielinhalte über eine Mobilfunkvermittlungsstelle an das anrufende Mobilkommunikationsendgerät und das angerufene Mobilkommunikationsendgerät gesendet werden, und durch das anrufende Mobilkommunikationsendgerät und das angerufene Mobilkommunikationsendgerät jeweils die empfangenen Abspielparameter und Abspielinhalte verarbeitet werden, und das Hintergrundgeräusch zusammen mit entsprechenden Stimmen abgespielt wird.

2. Verfahren nach Anspruch 1,
**dadurch gekennzeichnet, dass**
die Information hinsichtlich des Hintergrundgeräuschdiensts umfasst: eine Hintergrundgeräuschdienstnummer, die in einer Nummer mitgeführt wird, die von dem anrufenden Mobilkommunikationsendgerät gewählt wird.

3. Verfahren nach Anspruch 2,
**dadurch gekennzeichnet, dass**
ein spezieller Dienstidentifikationscode des Hintergrundgeräuschs, eine Seriennummer des abzuspielenden Hintergrundgeräuschs und eine Steuergeschwindigkeit des abzuspielenden Hintergrundgeräuschs durch die Hintergrundgeräuschdienstnummer mitgeführt werden.

4. Verfahren nach Anspruch 1,
**dadurch gekennzeichnet, dass**
die Information hinsichtlich des Hintergrundgeräuschdiensts umfasst: eine Information hinsichtlich einer Teilnahme an dem Hintergrundgeräuschdienst des anrufenden Mobilkommunikationsendgeräts; und/oder eine Information hinsichtlich einer Teilnahme an dem Hintergrundgeräuschdienst des angerufenen Mobilkommunikationsendgeräts.

5. Verfahren nach Anspruch 1,2,3 oder 4,
**dadurch gekennzeichnet, dass**
die Prozedur des Herstellens der Gesprächsverbindung zwischen dem anrufenden Mobilkommunikationsendgerät und dem angerufenen Mobilkommunikationsendgerät und des Abspielens eines Hintergrundgeräuschs für das anrufende Mobilkommunikationsendgerät und das angerufene Mobilkommunikationsendgerät durch das Hintergrundgeräuschdienstsystem ferner umfasst, dass:
durch die Netzseite eine Gesprächsverbindung mit drei Parteien zwischen dem anrufenden Mobilkommunikationsendgerät, dem angerufenen Mobilkommunikationsendgerät und dem Hintergrundgeräuschdienstsystem hergestellt wird;
durch das Hintergrundgeräuschdienstsystem das Hintergrundgeräusch für das anrufende Mobilkommunikationsendgerät und das angerufene Mobilkommunikationsendgerät abgespielt wird.

6. Verfahren nach Anspruch 5,
**dadurch gekennzeichnet, dass**
die Netzseite die Mobilfunkvermittlungsstelle umfasst, und die Mobilfunkvermittlungsstelle die Gesprächsverbindung mit drei Parteien zwischen dem anrufenden Mobilkommunikationsendgerät, dem angerufenen Mobilkommunikationsendgerät und dem Hintergrundgeräuschdienstsystem herstellt.

7. Verfahren nach Anspruch 6,
**dadurch gekennzeichnet, dass**
die Prozedur des Herstellens der Gesprächsverbindung mit drei Parteien zwischen dem anrufenden Mobilkommunikationsendgerät, dem angerufenen Mobilkommunikationsendgerät und dem Hintergrundgeräuschdienstsystem durch die Mobilfunkvermittlungsstelle ferner umfasst, dass:
durch die Mobilfunkvermittlungsstelle eine Gesprächsverbindung zwischen dem anrufenden Mobilkommunikationsendgerät und dem angerufenen Mobilkommunikationsendgerät hergestellt wird und Anweisungen zum Herstellen einer Gesprächsverbindung an das Hintergrundgeräuschdienstsystem gesendet werden;
durch das Hintergrundgeräuschdienstsystem ein Hintergrundgeräuschdienstkanal für die Mobilfunkvermittlungsstelle bereitgestellt wird;
durch die Mobilfunkvermittlungsstelle der Hintergrundgeräuschdienstkanal, der durch das Hintergrundgeräuschdienstsystem bereitgestellt wird, zu der Gesprächsverbindung zwischen dem anrufenden Mobilkommunikationsendgerät und dem angerufenen Mobilkommunikationsendgerät hinzugefügt wird, um das Gespräch mit drei Parteien herzustellen.

8. Verfahren nach Anspruch 1 oder 7,
**dadurch gekennzeichnet, dass**
die Mobilfunkvermittlungsstelle
eine Mobilfunkvermittlungsstelle der anrufenden Partei oder
eine Mobilfunkvermittlungsstelle des Roaming-Orts der anrufenden Partei oder
eine Mobilfunkvermittlungsstelle der angerufenen Partei oder
eine Mobilfunkvermittlungsstelle des Roaming-Orts der angerufenen Partei ist.

9. Verfahren nach Anspruch 5,
**dadurch gekennzeichnet, dass**
die Prozedur des Abspielens eines Hintergrundgeräuschs für das anrufende Mobilkommunikationsendgerät und das angerufene Mobilkommunikationsendgerät durch das Hintergrundgeräuschdienstsystem ferner den Schritt umfasst, dass:
das Hintergrundgeräuschdienstsystem das Abspielen des Hintergrundgeräuschs gemäß dem Tastensignal, das durch das anrufende Mobilkommunikationsendgerät und/oder das angerufene Mobilkommunikationsendgerät gesendet wird, steuert.

10. Verfahren nach Anspruch 9,
**dadurch gekennzeichnet, dass**
der Inhalt des Steuerns des Abspielens des Hintergrundgeräuschs gemäß dem Tastensignal eines der folgenden oder die Kombination dieser umfasst:
Auswählen des Hintergrundgeräuschs, das abgespielt werden soll, Anpassen der Geschwindigkeit des Abspielens des Hintergrundgeräuschs, Anpassen der Lautstärke des Abspielens des Hintergrundgeräuschs, Anpassen des Effekts des Abspielens des Hintergrundgeräuschs, Starten des Abspielens des Hintergrundgeräuschs oder Stoppen des Abspielens des Hintergrundgeräuschs.

## Revendications

1. Procédé pour ajouter un fond sonore à une conversation téléphonique mobile, comprenant les étapes consistant à :
recevoir, depuis le côté réseau, un appel effectué par un terminal de communication mobile appelant ;
envoyer, par le côté réseau, un signal sonore de retour d'appel au terminal de communication mobile appelant en accord avec un état de conversation d'un terminal de communication mobile appelé, établir une liaison de conversation entre le terminal de communication mobile appelant et le terminal de communication mobile appelé après avoir reçu le signal de décrochage du terminal de communication mobile appelé ; et
reproduire, par un système de service de fond sonore prévu du côté réseau, un fond sonore pour le terminal de communication mobile appelant et le terminal de communication mobile appelé en accord avec une information sur le service de fond sonore ;
**caractérisé en ce que**
l'étape de reproduction de fond sonore pour le terminal de communication mobile appelant et le terminal de communication mobile appelé par le système de service de fond sonore comprend :
en accord avec une information sur un numéro du terminal de communication mobile appelant, la recherche, par le système de service de fond sonore, d'informations de souscription sur le terminal de communication mobile appelant, et l'acquisition de paramètres de reproduction et de contenus de reproduction, et l'envoi des paramètres de reproduction et des contenus de reproduction au terminal de communication mobile appelant et au terminal de communication mobile appelé via un centre de commutation mobile, et le traitement, respectivement par le terminal de communication mobile appelant et par le terminal de communication mobile appelé, des paramètres de reproduction et des contenus de reproduction reçus, et la reproduction du fond sonore conjointement avec les voix correspondantes ; ou
en accord avec une information sur un numéro du terminal de communication mobile appelé, la recherche, par le système de service de fond sonore, d'informations de souscription sur le terminal de communication mobile appelé, et l'acquisition de paramètres de reproduction et de contenus de reproduction, et l'envoi des paramètres de reproduction et des contenus de reproduction au terminal de communication mobile appelant et au terminal de communication mobile appelé via un centre de commutation mobile, et le traitement, respectivement par le terminal de communication mobile appelant et par le terminal de communication mobile appelé, des paramètres de reproduction et des contenus de reproduction reçus, et la reproduction du fond sonore conjointement avec les voix correspondantes.

2. Procédé selon la revendication 1, **caractérisé en ce que** l'information sur le service de fond sonore est :
un numéro de service de fond sonore porté dans un numéro composé par le terminal de communication mobile appelant.

3. Procédé selon la revendication 2, **caractérisé en ce qu'**un code d'identification spécial de service de fond sonore, un numéro de série du fond sonore à reproduire et une vitesse de contrôle du fond sonore à reproduire sont portés par le numéro de service de fond sonore.

4. Procédé selon la revendication 1, **caractérisé en ce que** l'information sur le service de fond sonore est :
une information concernant la souscription du service de fond sonore du terminal de communication mobile appelant ; et/ou une information concernant la souscription du service de fond sonore du terminal de communication mobile appelé.

5. Procédé selon la revendication 1, 2, 3 ou 4, **caractérisé en ce que** la procédure pour établir la liaison de conversation entre le terminal de communication mobile appelant et le terminal de communication mobile appelé, et la reproduction du fond sonore pour le terminal de communication mobile appelant et pour le terminal de communication mobile appelé par le système de service de fond sonore comprend en outre :
l'établissement, par le côté réseau, d'une liaison de conversation avec tiers entre le terminal de communication mobile appelant, le terminal de communication mobile appelé, et le système de service de fond sonore ;
la reproduction, par le système de service de fond sonore, du fond sonore pour le terminal de communication mobile appelant et pour le terminal de communication mobile appelé.

6. Procédé selon la revendication 5, **caractérisé en ce que** le côté réseau comprend le centre de commutation mobile, et le centre de commutation mobile établit la liaison de conversation avec tiers entre le terminal de communication mobile appelant, le terminal de communication mobile appelé, et le système de service de fond sonore.

7. Procédé selon la revendication 6, **caractérisé en ce que** la procédure d'établissement de la liaison de conversation avec tiers entre le terminal de communication mobile appelant, le terminal de communication mobile appelé, et le système de service de fond sonore par le centre de commutation mobile comprend en outre :
l'établissement, par le centre de commutation mobile, d'une liaison de conversation entre le terminal de communication mobile appelant et le terminal de communication mobile appelé, et l'envoi d'instructions pour établir une liaison de conversation au système de service de fond sonore ;
la fourniture, par le système de service de fond sonore, d'un canal de service de fond sonore au centre de commutation mobile ;
l'addition, par le centre de commutation mobile, du canal de service de fond sonore fourni par le système de service de fond sonore à la liaison de conversation entre le terminal de communication mobile appelant et le terminal de communication mobile appelé pour établir la conversation avec tiers.

8. Procédé selon la revendication 1 ou 7, **caractérisé en ce que** le centre de commutation mobile est
un centre de commutation mobile du partenaire appelant, ou
un centre de commutation mobile de l'emplacement d'itinérance du partenaire appelant, ou
un centre de commutation mobile du partenaire appelé, ou
un centre de commutation mobile de l'emplacement d'itinérance du partenaire appelé.

9. Procédé selon la revendication 5, **caractérisé en ce que** la procédure de reproduction de fond sonore pour le terminal de communication mobile appelant et pour le terminal de communication mobile appelé par le système de service de fond sonore comprend en outre l'étape suivante :
le système de service de fond sonore contrôle la reproduction du fond sonore en accord avec le signal de bouton envoyé par le terminal de communication mobile appelant et/ou par le terminal de communication mobile appelé.

10. Procédé selon la revendication 9, **caractérisé en ce que** le contenu du contrôle pour la reproduction du fond sonore en accord avec le signal de bouton comprend l'un des suivants ou la combinaison de ceux-ci :
la sélection du fond sonore à reproduire, l'ajustement de la vitesse de reproduction du fond sonore, l'ajustement du volume de reproduction du fond sonore, l'ajustement des effets de reproduction du fond sonore, le démarrage de la reproduction du fond sonore ou l'arrêt de la reproduction du fond sonore.
